Europäisches Patentamt

European Patent Office

Office européen des brevets

(19)

(11) Numéro de publication : **0 415 494 B1**

(12) **FASCICULE DE BREVET EUROPEEN**

(45) Date de publication du fascicule du brevet :
30.11.94 Bulletin 94/48

(51) Int. Cl.⁵ : **H04N 7/00, H04N 7/137**

(21) Numéro de dépôt : **90202282.1**

(22) Date de dépôt : **27.08.90**

(54) **Procédé et dispositif de traitement d'images à estimation de mouvement améliorée.**

(30) Priorité : **29.08.89 FR 8911329**

(43) Date de publication de la demande :
**06.03.91 Bulletin 91/10**

(45) Mention de la délivrance du brevet :
**30.11.94 Bulletin 94/48**

(84) Etats contractants désignés :
**DE FR GB**

(56) Documents cités :
**EP-A- 0 294 961**
**SYMPOSIUM RECORD BROADCAST SES-**
**SIONS, 16TH INTERNATIONAL TV SYMPO-**
**SIUM 17-22 juin 1989, pages 37-52, Montreux,**
**CH; F.W.P. VREESWIJK et al.: "HDMAC**
**Coding for Compatible Broadcasting of High**
**Definition Television Signals"**
**IEEE GLOBAL TELECOMMUNICATIONS**
**CONFERENCE 26-29 november 1984, pages**
**1512-1515, Atlanta, Georgia, US; C.M. LIN et**
**al.: "An Adaptive Algorithm for Motion**
**Compensated Color Image Coding"**

(73) Titulaire : **LABORATOIRES D'ELECTRONIQUE**
**PHILIPS**
**22, avenue Descartes**
**F-94453 Limeil-Brévannes Cédex (FR)**
(84) **FR**
Titulaire : **N.V. Philips' Gloeilampenfabrieken**
**Groenewoudseweg 1**
**NL-5621 BA Eindhoven (NL)**
(84) **DE GB**

(72) Inventeur : **Guichard, Philippe, Société Civile**
**S.P.I.D.**
**156, Boulevard Haussmann**
**F-75008 Paris (FR)**
Inventeur : **Haghiri, Mohammad Reza, Société**
**Civile S.P.I.D.**
**156, Boulevard Haussmann**
**F-75008 Paris (FR)**

(74) Mandataire : **Caron, Jean et al**
**Société Civile S.P.I.D.**
**156, Boulevard Haussmann**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de traitement d'images de télévision, dans lequel l'image est divisée en plusieurs parties et chaque partie d'image est examinée pour y déterminer, en présence d'une série d'images se succédant dans le temps, un vecteur-mouvement.

Elle concerne aussi un dispositif de traitement d'images comportant un processeur pour, en présence d'une série d'images se succédant dans le temps, déterminer des vecteurs-mouvement associés à des parties d'image.

Elle concerne enfin un système de codage de télévision.

La présente invention peut être utilisée dans des systèmes d'émission-réception de télévision à haute définition ou ordinaires, dans des systèmes à enregistrement d'images, par exemple ceux utilisant un disque à lecture laser, et en général dans les systèmes de traitement numérique d'images.

Il est connu par la conférence intitulée "Motion compensated interpolation applied to HD-MAC pictures encoding and decoding" par F. Fonsalas et M.R. Haghiri, présentée au "2nd International workshop on signal processing of HDTV", l'Aquila, 29 Fev.- 3 Mars 1988, d'utiliser un tel procédé dans un système d'émission-réception de télévision, dans lequel des données complémentaires des données vidéo et notamment des vecteurs-mouvement sont transmis par voie numérique, dite DATV (Digitally Assisted Television, en langue anglaise).

Dans le système proposé par ce document, un codage est utilisé pour réduire la fréquence d'échantillonnage, avec un débit de données numériques associé le plus réduit possible. A cet effet l'image est divisée en plusieurs parties, à savoir des carrés de 16X16 pixels, pour chacun desquels un mode de traitement peut être choisi parmi plusieurs, dont l'un fait usage de vecteurs-mouvement. Pour l'affichage des images en réception, les vecteurs-mouvement sont utilisés pour reconstruire une image intermédiaire non transmise entre deux images transmises. Dans ce cas, les vecteurs-mouvement ont été déterminés au moment du codage, c'est à dire alors qu'on a encore à sa disposition toutes les images sources et notamment celles qui vont être supprimées par le codage, ce qui permet de procéder à tous les essais souhaitables pour vérifier la validité des vecteurs-mouvement, notamment en comparant une image reconstruite sur la base des vecteurs-mouvement avec l'image source correspondante.

Un problème particulier se pose lorsqu'il s'agit de créer des images intermédiaires à un moment où on ne dispose pas de l'image source pour comparaison. Ceci est par exemple le cas lorsqu'on veut introduire à chaque fois une image supplémentaire entre deux images pour doubler la cadence d'affichage afin de diminuer l'impression de scintillement. Quand une image présente une structure périodique, par exemple lorsqu' elle représente au moins localement une grille ou des rayures, horizontales ou verticales, il se peut que plusieurs vecteurs différents donnent des résultats équivalents pour certaines parties d'image, c'est à dire que des vecteurs erronés peuvent néanmoins donner des résultats corrects (pas de défaut visible) pour certaines parties d'image (ceci sera expliqué en détail plus loin). Mais si le vecteur choisi est erroné pour certaines parties de l'image, alors qu'il est correct pour d'autres parties, il y a des défauts visibles à la transition entre les parties qui ont un vecteur correct et celles qui ont un vecteur erroné.

Il est connu par le document cité d'utiliser une fonction de coût, calculée sur les 256 pixels d'une partie d'image, qui permet de déterminer lequel est le plus approprié parmi plusieurs vecteurs-mouvements, mais l'estimation ainsi réalisée ne permet pas de lever l'ambiguïté lorsque plusieurs vecteurs-mouvement peuvent convenir aussi bien l'un que l'autre pour une même partie d'image, c'est à dire lorsqu'il existe plusieurs vecteurs-mouvement pour lesquels la susdite fonction de coût donne des résultats équivalents. De tels vecteurs seront appelés vecteurs équivalents.

L'invention est basée sur la constatation que ce problème est résolu lorsqu'il est fait usage d'un critère géométrique en plus de l'utilisation d'une fonction de coût. Une sélection d'un vecteur parmi plusieurs vecteurs mouvement équivalents est décrite par exemple par EP-A-0294961.

Le procédé de l'invention est notamment remarquable en ce que, la méthode de détermination de vecteur-mouvement étant susceptible de fournir pour une même partie d'image plusieurs vecteurs-mouvement équivalents, on calcule, pour chaque vecteur-mouvement équivalent, la position où la partie d'image concernée se trouverait dans une image antérieure si on appliquait à cette partie d'image ledit vecteur-mouvement, et on calcule à chaque fois la différence entre le vecteur-mouvement utilisé pour arriver à ladite position et le vecteur-mouvement qui avait été déterminé pour cette position dans l'image antérieure, le vecteur-mouvement étant finalement choisi en fonction du résultat dudit calcul de différence.

Le dispositif selon l'invention est notamment remarquable en ce que, ledit processeur étant susceptible de fournir pour une même partie d'image plusieurs vecteurs-mouvement équivalents, le dispositif est muni en outre de moyens pour calculer, pour chaque vecteur-mouvement équivalent, la position où la partie d'image concernée se trouverait dans une image antérieure si on appliquait à cette partie d'image ledit vecteur-mouvement, de moyens pour calculer à chaque fois la différence entre le vecteur-mouvement utilisé pour arriver à ladite position et le vecteur-mouvement qui avait été déterminé pour cette position dans l'image antérieure, et de moyens pour sélectionner un (ou des) vecteur(s)-mouvement à partir de cette différence calculée.

La description qui va suivre, en regard des dessins annexés décrivant des exemples non limitatifs fera bien comprendre comment l'invention peut être réalisée.

Les figures 1. à 3. représentent des signaux video pour expliquer le problème que résout l'invention.

La figure 4. représente schématiquement un dispositif dans lequel est mis en oeuvre le procédé de l'invention.

La figure 5. représente des groupes de parties d'images qui se succèdent dans le temps, pour illustrer le procédé de l'invention.

Les figures 6. à 8. sont des tableaux montrant des exemples de détermination d'un vecteur-mouvement parmi un ensemble de vecteurs-mouvement équivalents.

Dans le présent exemple, on suppose que chaque image est divisée en parties d'images qui sont des carrés de 16X16 pixels, soit 256 pixels par partie d'image. Le processus commence par la détermination du mouvement pour chaque partie d'image. Cette détermination est bien entendu basée sur un examen fait à deux instants différents pour mesurer les déplacements qui se sont produits entre les deux instants. Elle peut être faite par n'importe quel procédé connu, par exemple un procédé basé sur des différences spatio-temporelles, ou bien utilisant des techniques de transformée de Fourier, ou bien basé sur des comparaisons avec application d'une fonction de coût. Ces trois procédés sont décrits par exemple dans un rapport de la British Broadcasting Corporation; BBC RD 1987/11, intitulé: "Television motion measurement for DATV and other applications", par G.A. Thomas.

Le procédé qui utilise une fonction de coût et qui est aussi décrit dans le document mentionné en premier, sera maintenant rappelé brièvement.

Les vecteurs-mouvement sont estimés en sélectionnant parmi un jeu de vecteurs équivalents celui qui minimise une fonction de coût exprimée, sur les 256 pixels d'un partie d'image, par l'expression suivante:

$$\sum_{x,y=1,1}^{16,16} I_0(x,y) - \tfrac{1}{2}(I_1(x-V_x,y-V_y)+I_1(x+V_x,y+V_y))$$

Où $I_0$ et $I_1$ sont les intensités d'un pixel dans des images d'indice temporel respectivement 0 et 1 pour les positions indiquées entre parenthèses (selon des coordonnées orthogonales propres au carré considéré), $V_x$ et $V_y$ étant les composantes orthogonales du vecteur-mouvement considéré.

Après l'estimation du mouvement ainsi réalisée, il importe de vérifier si le vecteur-mouvement choisi permet d'obtenir la meilleure image. En effet d'autres modes de traitement peuvent être envisagés qui éventuellement pourraient donner une meilleure image, et notamment un mode dans lequel une image serait décrite plus vite mais avec une définition spatiale inférieure. Pour cette vérification un décodage respectivement inverse du codage est réalisé dans chacun des modes envisagés et dans chaque mode la partie d'image décodée et la partie d'image source sont comparées, afin de déterminer quel est le mode qui donne la meilleure image pour la partie en question (pour l'instant toutes les images sources sont disponibles).

Supposons maintenant que la supériorité du mode avec vecteur-mouvement ait été constatée, pour un carré déterminé. Dès lors il n'est pas question d'utiliser un autre mode.

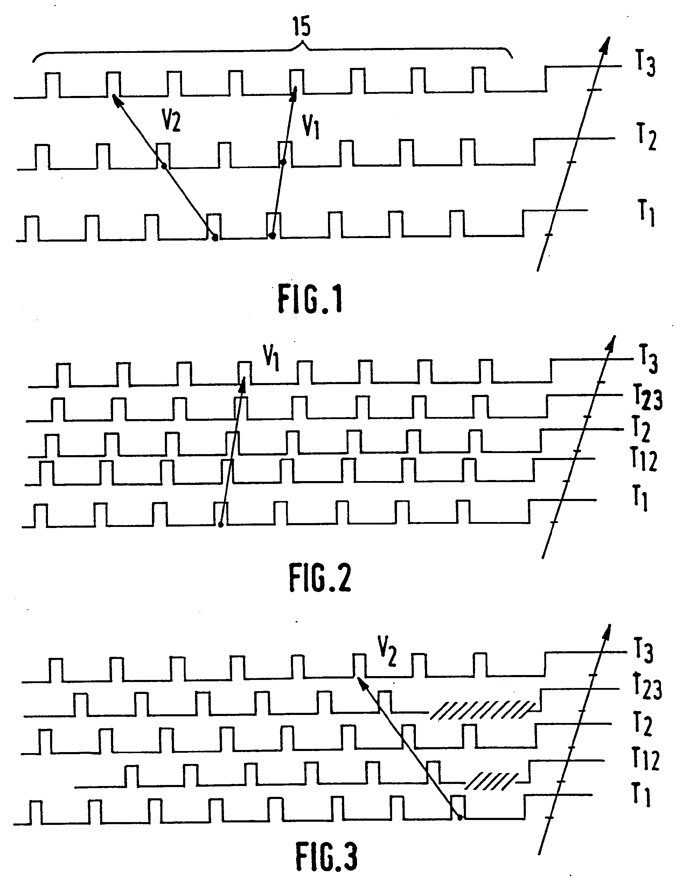

Des signaux video sont représentés sur la figure 1 aux temps référencés T1, T2, T3. Ces signaux correspondant par exemple en 15 à l'image d'une grille verticale claire (en modulation positive) avec à droite sur la figure une partie claire de plus grande largeur dont la limite droite n'est pas représentée. Si l'on applique la méthode expliquée ci dessus à ces signaux on constate que pour l'image de la grille il y a deux vecteurs $V_1$ et $V_2$ qui sont équivalents (ils donnent la même valeur pour la fonction de coût et en outre ils donneraient aussi le même résultat lors de la vérification du meilleur mode). Soit à créer des images intermédiaires pour diminuer l'impression visuelle de scintillement, à partir de ces images successives aux temps T1, T2, T3. Les images recréées à partir du vecteur V1 sont représentées par la figure 2 et celle recréées à partir du vecteur V2 sont représentées par la figure 3. Le temps entre T1 et T2 est appelé T12 et le temps entre T2 et T3 est appelé T23. Sur la figure 2, les images intermédiaires T12 et T23 sont correctes. Sur la figure 3, il y a des zones indiquées par des hachures à 45° où il y a incertitude: il est évident qu'un processus automatique est impuissant à réparer les lacunes d'information.

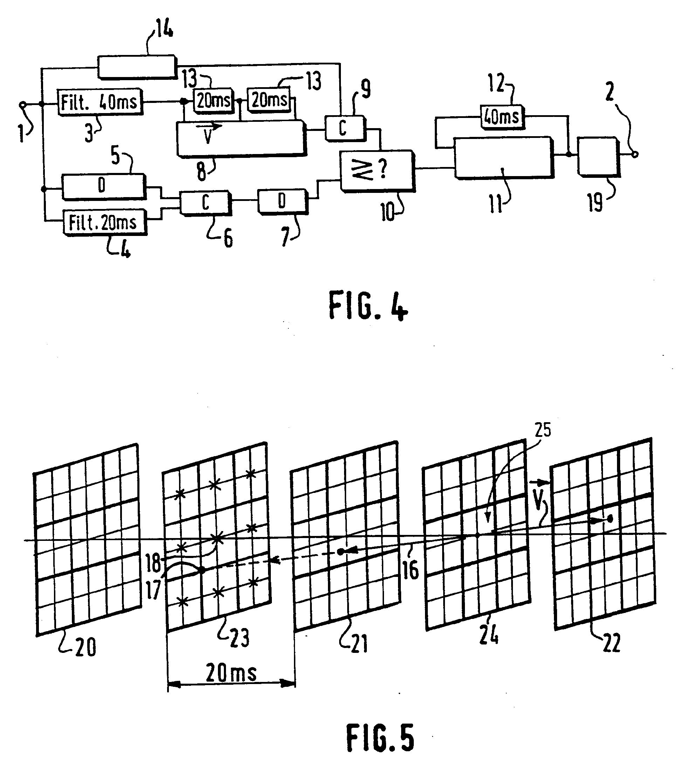

Sur le dispositif de codage de la figure 4, des images à coder sont introduites en 1. Elles peuvent alors être appliquées à deux voies différentes:

La voie du haut sur la figure est destinée à un codage avec estimation de vecteurs-mouvement dans lequel une image complète est décrite en 40 mS: les images traversent un filtre 3 et les vecteurs-mouvement sont déterminés dans un module 8 selon la méthode décrite plus haut (fonction de coût). Le module 8 a besoin de connaître les images à deux époques successives, images qui lui sont fournies simultanément par les sorties de deux circuits de retard 13 en cascade, qui apportent chacun un retard de 20 mS. L'image filtrée avec ses vecteurs-mouvement est fournie à un module 9 qui calcule la valeur de la susdite fonction de coût, par comparaison avec l'image source 1 qui lui est aussi fournie au travers d'un circuit de retard 14 dont le retard est égal à celui apporté par les circuits 3 et 8.

La voie du bas sur la figure est destinée à un codage sans estimation de vecteurs-mouvement et dans lequel une image complète est décrite en 20 mS: les images traversent un filtre 4 et sont fournies à un module 6 qui calcule la valeur de la susdite fonction de coût, par comparaison avec l'image source 1 qui lui est fournie au travers d'un circuit de retard 5 dont le retard est égal à celui apporté par le filtre 4.

Les deux coûts calculés respectivement dans les modules 6 et 9 sont fournis à un module d'évaluation 10. Comme le retard apporté par les éléments 3,8 est plus grand que celui apporté par les éléments 4,6, un circuit de retard supplémentaire 7 est introduit entre les modules 6 et 10 pour que les informations des modules 6 et 9 arrivent ensemble au module 10.

Le module 10 détermine quelle est la meilleure voie, c'est à dire le meilleur mode de codage, en choisissant celle des deux voies pour laquelle la fonction de coût est la plus favorable. En variante, il peut aussi choisir à priori la voie avec vecteur-mouvement si le coût évalué pour cette voie est inférieur à une valeur prédéterminée (donc sans faire intervenir le coût calculé pour l'autre voie). Néanmoins plusieurs vecteurs-mouvements peuvent toujours être équivalents, vecteurs entre lesquels on ne sait pas choisir. C'est pourquoi le module 10 est suivi d'un module 11 dans lequel est calculée une valeur de distorsion géométrique et d'un module 19 dans lequel un critère basé sur cette valeur permet de choisir le meilleur vecteur-mouvement.

Si le mode avec vecteur-mouvement a été choisi, les vecteurs-mouvement sont fournis par le module 10 au module 11. Afin de pouvoir comparer les vecteurs d'une image à ceux d'une image antérieure, le module 11 est muni d'un circuit de rebouclage avec un retard de 40 mS qui lui "ramène" les vecteurs de l'image antérieure à comparer.

Le processus de comparaison mis en oeuvre dans le module 11 est illustré par la figure 5. Les trois images 20, 21, 22 sont des images transmises, et les images 23 et 24 sont des images à créer au moyen des vecteurs-mouvement. Sur la figure, seule une fraction d'image contenant neuf parties d'image est représentée à chaque fois, fraction qui sera néanmoins nommée image pour simplifier la terminologie. Soit à vérifier la validité d'un vecteur-mouvement de l'image 24 alors que le processus est maintenant terminé pour les images 20,21,23. Pour chaque vecteur-mouvement à tester, on applique à la partie d'image concernée un déplacement correspondant à un retour en arrière dans le temps de 40 mS dans la direction et avec la vitesse indiquées par ledit vecteur-mouvement, ce qui amène ladite partie d'image de l'image 24 dans une des parties de l'image 23. Soit par exemple le vecteur-mouvement symbolisé par la flèche 16, qui amène le point central de l'image 24 au point 17 dans l'image 23. Ce point est situé dans le carré 18, pour lequel un vecteur-mouvement avait été déterminé dans l'image 23. La distorsion entre ce vecteur antérieur et le vecteur courant testé pour l'image 24 est calculée et mémorisée. Puis l'opération est répétée pour tous les vecteurs équivalents pour la partie d'image courante de l'image 24.

Si par exemple les vecteurs-mouvement ont des amplitudes limitées (pour des raisons de débit de transmission) à 16 pixels selon chaque axe de coordonnées, le point 17 ne peut être à l'extérieur des quatre carrés du centre sur la figure (chacun d'eux a une dimension de 16X16 pixels). Pour l'ensemble des vecteurs-mouvement à tester pour une partie d'image 24, il y a au maximum quatre parties d'image concernées dans l'image 23, donc le processus de comparaison est simple et nécessite très peu de capacité de mémorisation.

Le module 19 qui suit le module 11 détermine enfin le vecteur-mouvement qui sera utilisé. Les modules 8 et 9 de la figure 4 sont munis de moyens processeurs pour déterminer éventuellement plusieurs vecteurs-mouvement équivalents et calculer pour chacun sa fonction de coût. Ces données sont fournies au module 19. Le processus dans le module 19 est alors le suivant: il contient un registre dans lequel il range la liste des vecteurs-mouvement équivalents pour une partie d'image, et cela en les classant par ordre de mérite décroissant du point de vue de la fonction de coût calculée dans le module 9. S'il existe un ensemble de vecteurs-mouvement pour lesquels les valeurs de comparaison fournies par le module 11 sont elles mêmes équivalentes, c'est à dire que les distorsions sont toutes inférieures à une valeur prédéterminée, le vecteur-mouvement choisi est celui qui, parmi les éléments de cet ensemble, est le plus près du début de la liste. Si par exemple l'ensemble ne contient qu'un vecteur-mouvement, c'est lui qui sera choisi, même s'il n'est pas en tête de liste. Si par contre aucune valeur de comparaison n'est convenable, c'est parce que le mouvement n'a pas été régulier entre les deux images comparées, et que donc la méthode n'est pas adaptée, et le vecteur-mouvement en tête de la liste est choisi.

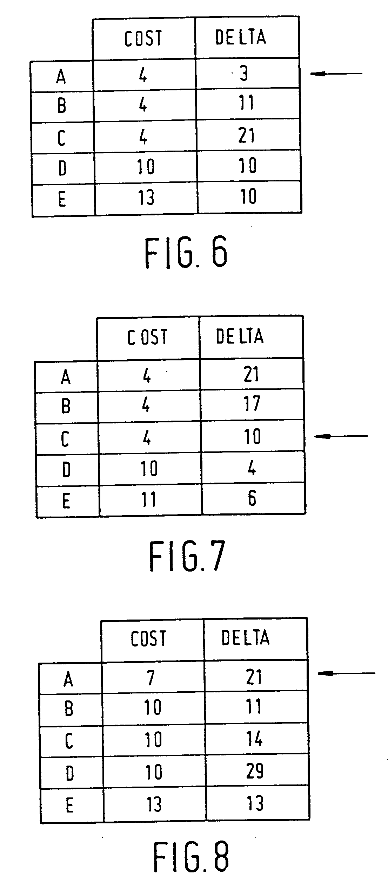

Des exemples numériques, donnés en référence aux figures 6 à 8, permettent de comprendre encore mieux l'invention. Les tables représentées sur ces figures donnent des exemples de valeurs de coût (indiquées dans la colonne "COST") et de valeurs de différence géométrique (indiquées dans la colonne "DELTA") pour cinq vecteurs dénommés A, B, C, D, E, ces valeurs numériques ne devant pas être considérées comme des valeurs réelles mais comme des valeurs choisies aux fins de la meilleure explication possible. Comme indiqué précédemment, les vecteurs A à E sont classés par ordre de mérite décroissant du point de vue de la fonction de coût.

Ces vecteurs sont considérés comme équivalents lorsque les valeurs qui leur sont associées sont dans une gamme déterminée, ici par exemple lorsque les valeurs de coût ou de différence géométrique sont inférieures ou égales à une valeur de seuil égale à 10, ce qui se lit immédiatement sur les tableaux des figures. Par exemple, sur là figure 6, on constate que, lorsqu'on s'exprime en fonction de coût, les vecteurs A, B, C, D sont équivalents (et de même sur les figures 7 et 8 dans les exemples choisis) et que, lorsqu'on s'exprime en différence géométrique, les vecteurs A, D, E (C, D, E dans le cas de la figure 7 aucun vecteur dans le cas de la figure 8) sont équivalents et forment ledit ensemble de vecteurs-mouvement mentionné précédemment. Dans cet ensemble de trois vecteurs-mouvement A, D, E, le vecteur-mouvement finalement choisi est celui pour lequel la différence calculée est la plus faible.

De même, dans le cas de la figure 7, parmi les trois vecteurs présélectionnés C, D, E, le vecteur finalement choisi est le vecteur C, celui pour lequel la fonction de coût a la valeur la plus favorable, c'est-à-dire la valeur la plus faible. Enfin, dans le cas de la figure 8, il n'existe pas de vecteur-mouvement pour lequel la différence géométrique est inférieure au seuil de 10, et l'on choisit donc comme vecteur celui pour lequel la fonction de coût est la plus favorable, c'est-à-dire le vecteur A.

## Revendications

1. Procédé de traitement d'images, dans lequel l'image est divisée en plusieurs parties et chaque partie d'image est examinée pour y déterminer, en présence d'une série d'images se succédant dans le temps, un vecteur-mouvement, caractérisé en ce que, la méthode de détermination de vecteur-mouvement étant susceptible de fournir pour une même partie d'image plusieurs vecteurs-mouvement tous convenables appelés vecteurs-mouvement équivalents, on calcule, pour chaque vecteur-mouvement équivalent, la position où la partie d'image concernée se trouverait dans une image antérieure si on appliquait à cette partie d'image ledit vecteur-mouvement, et on calcule à chaque fois la différence entre le vecteur-mouvement utilisé pour arriver à ladite position et le vecteur-mouvement qui avait été déterminé pour cette position dans l'image antérieure, le vecteur-mouvement étant finalement choisi en fonction du résultat dudit calcul de différence.

2. Procédé de traitement d'images selon la revendication 1, utilisant une méthode de détermination de vecteur-mouvement basée sur le calcul d'une fonction exprimant la validité d'un vecteur-mouvement, caractérisé en ce que, s'il existe plusieurs vecteurs-mouvement pour lesquels ladite différence est inférieure à un seuil prédéterminé, on choisit parmi eux celui pour lequel la dite fonction a la valeur la plus favorable.

3. Procédé de traitement d'images selon l'une des revendications 1 ou 2, utilisant une méthode de détermination de vecteur-mouvement basée sur le calcul d'une fonction exprimant la validité d'un vecteur-mouvement, caractérisé en ce que, s'il n'existe aucun vecteur-mouvement pour lequel ladite différence est inférieure à un seuil prédéterminé, on choisit parmi les vecteurs équivalents celui pour lequel la dite fonction a la valeur la plus favorable.

4. Dispositif de traitement d'images comportant un processeur pour, en présence d'une série d'images se succédant dans le temps, déterminer des vecteurs-mouvement associés à des parties d'image, caractérisé en ce que, ledit processeur étant susceptible de fournir pour une même partie d'image plusieurs vecteurs-mouvement équivalents, le dispositif est muni en outre de moyens pour calculer, pour chaque vecteur-mouvement équivalent, la position où la partie d'image concernée se trouverait dans une image antérieure si on appliquait à cette partie d'image ledit vecteur-mouvement, de moyens pour calculer à chaque fois la différence entre le vecteur-mouvement utilisé pour arriver à ladite position et le vecteur-mouvement qui avait été déterminé pour cette position dans l'image antérieure, et de moyens pour sélectionner un (ou des) vecteur(s)-mouvement à partir de cette différence calculée.

5. Dispositif de traitement d'images selon la revendication 4, dont ledit processeur comporte des moyens pour calculer une fonction de coût afin de décider si chacun desdits vecteurs-mouvement est acceptable, caractérisé en ce qu'il est muni de moyens pour, s'il existe plusieurs vecteurs-mouvement pour lesquels la susdite différence est inférieure à un seuil prédéterminé, choisir parmi eux celui pour lequel la fonction de coût a la valeur la plus favorable.

6. Dispositif de traitement d'images selon l'une des revendications 4 ou 5, dont ledit processeur est muni de moyens pour calculer une fonction de coût afin de décider si chacun desdits vecteurs-mouvement est acceptable, caractérisé en ce qu'il est muni de moyens pour, s'il n'existe aucun vecteur-mouvement pour lequel la susdite différence est inférieure à un seuil prédéterminé, choisir le vecteur-mouvement pour lequel la fonction de coût a la valeur la plus favorable.

7. Système de codage de télévision à haute définition comportant un dispositif selon l'une des revendications 4 à 6.

**Patentansprüche**

1. Verfahren zur Bildverarbeitung, bei dem das Bild in mehrere Teile aufgeteilt und jeder Bildteil geprüft wird, um darin bei Vorhandensein einer zeitlich aufeinanderfolgenden Bildserie einen Bewegungsvektor zu bestimmen, dadurch gekennzeichnet, daß man, da die Methode zur Bestimmung eines Bewegungsvektors mehrere äquivalente Bewegungsvektoren für einen gleichen Bildteil liefern kann, die alle gleich gut geeignet sind und deshalb äquivalente Bewegungsvektoren genannt werden, für jeden äquivalenten Bewegungsvektor die Position, in der sich der betreffende Bildteil in einem vorhergehenden Bild befinden würde, wenn man den Bewegungsvektor auf diesen Bildteil anwenden würde, und jeweils die Differenz zwischen dem zum Erreichen der Position verwendeten Bewegungsvektor und dem Bewegungsvektor, der für diese Position im vorhergehenden Bild bestimmt wurde, berechnet, wobei der Bewegungsvektor schließlich entsprechend dem Ergebnis der Differenzrechnung ausgewählt wird.

2. Verfahren zur Bildverarbeitung nach Anspruch 1, das eine Methode zur Bestimmung von Bewegungsvektoren verwendet, die auf der Berechnung einer Funktion basiert, die die Gültigkeit eines Bewegungsvektors ausdrückt, dadurch gekennzeichnet, daß man bei Vorhandensein mehrerer Bewegungsvektoren, deren Differenz unter einem vorherbestimmten Grenzwert liegt, denjenigen auswählt, für den die Funktion den günstigsten Wert liefert.

3. Verfahren zur Bildverarbeitung nach Anspruch 1 oder 2, das eine Methode zur Bestimmung von Bewegungsvektoren verwendet, die auf der Berechnung einer Funktion basiert, die die Gültigkeit eines Bewegungsvektors ausdrückt, dadurch gekennzeichnet, daß man bei Nichtvorhandensein eines Bewegungsvektors, dessen Differenz unter einem vorherbestimmten Grenzwert liegt, aus den äquivalenten Vektoren denjenigen auswählt, für den die Funktion den günstigsten Wert liefert.

4. Vorrichtung zur Bildverarbeitung mit einem Prozessor, um bei Vorhandensein einer Serie zeitlich aufeinanderfolgender Bilder Bildteilen zugeordnete Bewegungsvektoren zu bestimmen, dadurch gekennzeichnet, daß die Vorrichtung, da der Prozessor für einen gleichen Bildteil mehrere äquivalente Bewegungsvektoren liefern kann, außerdem Mittel zum Berechnen der Position jedes äquivalenten Bewegungsvektors, in der sich der betreffende Bildteil in einem vorhergehenden Bild befinden würde, wenn man auf diesen Bildteil den Bewegungsvektor anwenden würde, Mittel zum jeweiligen Berechnen der Differenz zwischen dem zum Erreichen der Position verwendeten Bewegungsvektor und dem Bewegungsvektor, der für diese Position im vorhergehenden Bild bestimmt wurde, und Mittel zum Auswählen eines oder mehrerer Bewegungsvektoren anhand dieser Differenz umfaßt.

5. Vorrichtung zur Bildverarbeitung nach Anspruch 4, deren Prozessor Mittel zum Berechnen einer Kostenfunktion umfaßt, um entscheiden zu können, ob jeder dieser Vektoren annehmbar ist, dadurch gekennzeichnet, daß sie Mittel umfaßt, um bei Vorhandensein mehrerer Bewegungsvektoren, deren Differenz unterhalb eines vorherbestimmten Grenzwerts liegt, denjenigen auszuwählen, für den die Kostenfunktion den günstigsten Wert liefert.

6. Vorrichtung zur Bildverarbeitung nach Anspruch 4 oder 5, deren Prozessor Mittel zum Berechnen einer Kostenfunktion umfaßt, um entscheiden zu können, ob jeder der Bewegungsvektoren annehmbar ist, dadurch gekennzeichnet, daß sie Mittel umfaßt, um bei Nichtvorhandensein eines Bewegungsvektors, dessen Differenz unter einem vorherbestimmten Grenzwert liegt, den Bewegungsvektor auszuwählen, für den die Kostenfunktion den günstigsten Wert liefert.

7. High-Definition-Fernsehcodierungssystem mit einer Vorrichtung nach einem der Ansprüche 4 bis 6.

## Claims

1. A method of processing images, in which the image is divided into several parts and each image part is examined for determining, in the presence of a series of images succeeding each other in time, a motion vector, characterized in that, with the method of determining a motion vector being susceptible to supplying for the same image part several motion vectors all suitable and designated as equivalent motion vectors, for each equivalent motion vector the position is calculated in which the image part concerned would be located in a preceding image if said motion vector should be applied to this image part, and each time the difference between the motion vector used to arrive at said position and the motion vector which had been determined for this position in the preceding image is calculated, the motion vector being finally chosen as a function of the result of said difference calculation.

2. A method of processing images as claimed in Claim 1, utilizing a method of determining motion vectors based on the calculation of a function expressing the validity of a motion vector, characterized in that, if several motion vectors exist for which said difference is smaller than a predetermined threshold value, that vector is chosen among them for which said function has the most favourable value.

3. A method of processing images as claimed in any one of Claim 1 or 2, utilizing a method of determining motion vectors based on the calculation of a function expressing the validity of a motion vector, characterized in that, if no motion vector exists for which said difference is smaller than a predetermined threshold value, among the equivalent vectors that vector is chosen for which said function has the most favourable value.

4. A device for processing images comprising a processor for determining, in the presence of a series of images succeeding each other in time, motion vectors associated with image parts, characterized in that, with said processor being susceptible to supplying for the same image part several equivalent motion vectors, the device is also provided with means for calculating for each equivalent motion vector the position in which the image part concerned would be located in a preceding image if said motion vector should be applied to this image part, with means for calculating each time the difference between the motion vector used to arrive at said position and the motion vector which had been determined for this position in the preceding image, and with means for selecting one motion vector (or motion vectors) from this calculated difference.

5. A device of processing images as claimed in Claim 4, in which said processor comprises means for calculating a cost function in order to decide whether each of said motion vectors is acceptable, characterized in that it is provided with means for choosing, if several motion vectors exist for which the aforementioned difference is smaller than a predetermined threshold value, among them that vector for which the cost function has the most favourable value.

6. A device for processing image as claimed in any one of Claim 4 or 5, of which said processor is provided with means for calculating a cost function in order to decide whether each of said motion vectors is acceptable, characterized in that it is provided with means for choosing, if motion vector exists for which the aforementioned difference is smaller than a predetermined threshold value, the motion vector for which the cost function has the most favourable value.

7. A high definition television encoding system comprising a device as claimed in any one of Claims 4 to 6.

FIG.1

FIG.2

FIG.3

FIG. 4

FIG. 5

|   | COST | DELTA |
|---|---|---|
| A | 4 | 3 |
| B | 4 | 11 |
| C | 4 | 21 |
| D | 10 | 10 |
| E | 13 | 10 |

## FIG. 6

|   | COST | DELTA |
|---|---|---|
| A | 4 | 21 |
| B | 4 | 17 |
| C | 4 | 10 |
| D | 10 | 4 |
| E | 11 | 6 |

## FIG. 7

|   | COST | DELTA |
|---|---|---|
| A | 7 | 21 |
| B | 10 | 11 |
| C | 10 | 14 |
| D | 10 | 29 |
| E | 13 | 13 |

## FIG. 8